# EUROPEAN PATENT APPLICATION

(11) **EP 0 750 171 A2**
(43) Date of publication of application: **27.12.1996**
(21) Application number: 96112514.3
(22) Date of filing: 09.11.1992
(51) Int. Cl.: G01B 5/012

(54) **Touch probe**

(30) Priority: 09.11.1991 GB 9123853; 21.11.1991 GB 9124777; 22.07.1992 GB 9215512
(62) Divisional of application: 92923048.0
(71) Applicant: Renishaw Metrology Limited, Wotton-Under-Edge, Gloucestershire GL12 8JR (GB)
(72) Inventor: Hajdukiewicz, Peter, Gloucestershire, GL12 7AR (GB); Hellen, Graham Andrew, North Yate, Bristol, BS17 5TE (GB); Hellier, Peter Kenneth, North Nibley, Gloucestershire, GL11 6DX (GB); Dabbs, John Christopher, Chepstow, Gwent, NP6 5JB (GB); McMurtry, David Roberts, Gloucestershire, GL12 7EF (GB)
(74) Representative: Jones, Bruce Graeme Roland

(57) **Abstract**

A magazine has a plurality of storage ports 100 each of which retains a stylus module 14 for use in measuring workpiece dimensions on a coordinate measuring machine. Each storage port 100 is configured as a pair of jaws provided by docking inserts 114. A permanent magnet 118 is mounted on each docking insert 114. The lower casing of the stylus module 14 is urged against the inwardly facing edges 116 of the docking inserts 114 by the magnetic attraction force due the magnets 118. The stylus module 14 is engaged with a retaining module (on the quill of the machine) by moving the retaining module in a downward sense to engage the stylus module 14; further downward movement disengages the stylus module 14 from the storage port 100, thus enabling engagement of such a stylus module and removal of the module from the storage port in a single continuous movement.

## Description

The present invention relates to a touch probe used, for example, on a coordinate positioning machine such as a machine tool or coordinate measuring machine.

Such probes are known from U.S. 4,153,998, and comprise a fixed structure by which the probe may be connected to the movable arm of the machine, relative to which a stylus having a measuring tip for contacting the workpiece is supported. The position of a workpiece surface is detected by operating the machine to drive the measuring tip of the stylus into contact with the surface whose position is to be measured, and detecting, with the probe, contact between the measuring tip and the surface. The probe emits a signal indicative of such contact, and this is used to record the position of the movable arm and to instruct the machine control to brake its movement. In order to prevent damage to the stylus when, during braking of its movement, the movable arm overtravels the point of contact between the stylus tip and surface, the stylus is carried on a stylus-supporting member which is supported on the fixed structure in a rest location, out of which it may be displaced when a deflecting force is applied to the stylus, and to which it may return when the deflecting force is removed. This displacement of the stylus- supporting member is known as "overtravel displacement". Good positional repeatability of the stylus-supporting member relative to the fixed structure from one overtravel displacement to the next is required in order that the position of the surface may be measured accurately.

It is, on occasions, desirable to change the stylus carried by the probe. For example, the measurement of different features on a workpiece may require the use of different geometries and lengths of styli.

In our European patent application 92301504.4, we disclose a probe enabling automatic exchange of styli, having a modular construction which includes a stylus module releasably mountable on a sensing module. The stylus module has a casing, and a stylus supporting member biased into a rest position which enables overtravel displacement relative to the casing. The sensing module comprises a fixed structure (by which it is retained on the movable arm supporting a strain sensitive load cell on which the stylus module is magnetically retained. Contact of the stylus tip with a surface is detected by the load cell, which senses levels of strain in the stylus occurring before overtravel displacement, and which are transmitted through the casing of the stylus module to the load cell.

A first aspect of the present invention relates to the appreciation of an associated disadvantage with this modular construction of probe. If, due to an error in the part inspection programme of the machine, the probe is driven so that the stylus module accidentally becomes detached from the strain sensitive retaining module (e.g. due to excessive overtravel), the probe no longer has the capacity to register a trigger without crashing the sensing module, and thus causing irreparable damage. In spite of this, the control of the machine will continue to operate the machine as if the probe is completely functional; evidently, this situation may result in serious damage to either the machine or the probe or both.

A first independent aspect of the present invention provides a probe including a sensing module and a stylus module which is releasably mountable to the retaining module, wherein the sensing module comprises means for detecting when a said stylus module is mounted thereto, and for outputting an alarm signal accordingly.

The detecting means may be provided by any suitable mechanism e.g. a microswitch, an optical sensor or a magnetic sensor.

The alarm signal from the detecting means is used to instruct the machine control to arrest motion of the movable arm on which the sensing module is supported, and thus prevent any damage to either the machine or the sensing module.

To provide a truly flexible measuring system, a plurality of stylus modules must be retained within the working area of the machine to enable automatic exchange of one stylus module for another. A second independent aspect of the present invention relates to a storage system for retaining a plurality of task modules (such as a stylus module) on a machine, wherein each of the task modules is interchangeably connectable to a retaining module (such as a sensing module) supported on the movable arm of the machine.

According to a second aspect of the present invention, a magazine is provided which includes a plurality of storage ports, each for supporting a task module, each said task module having a set of engagement elements, magnetising means being provided for urging said task module in a first direction into contact with said storage port, wherein said storage port and said task module are configured so that said engagement elements are accessible from a direction opposite to said first direction, and that, upon application to said task module of a force exceeding the force from the magnetising means, said task module may move relative to said support structure in said direction opposite to said first direction.

Such a magazine and task modules enable engagement of a task module by a retaining module, and disengagement of the task module from the storage port in a single continuous movement and without any additional machine apparatus (such as dedicated motors or electromagnets).

Typically a task module may be a stylus module, or a stylus. However more complex forms of task module may be provided (e.g. a temperature sensor, an accelerometer or a pressure sensor) with, where required, an appropriate retaining module.

The use of a probe as described above with a magazine enabling automatic exchange of stylus modules gives rise to a further problem in that, during a stylus changing operation, the machine is operated to deposit a stylus module in a vacant storage port of the magazine, and then to move the sensing module to a different storage port in order to engage a new stylus module. Inevitably, the sensing module does not carry a stylus module while it moves between two ports of the magazine in the course of a stylus changing operation; the detecting means will thus emit an alarm signal preventing movement, and effectively prevent automatic stylus changing.

A third aspect of the present invention relates to the generation of a signal inhibiting the alarm signal when a sensing module is in close proximity with the magazine.

A third aspect of the present invention provides a coordinate positioning machine comprising: a table; an arm supported by a support structure providing relative movement of the table and the arm; a probe supported on the arm, having a retaining module and a task module releasably connectable to the retaining module, the retaining module having means for detecting when a said task module becomes disconnected therefrom, and for generating an alarm signal accordingly to arrest said relative movement of said table and said alarm; a magazine having a plurality of storage ports, each for retaining a said task module to enable exchange of one said task module on said retaining module for another; wherein sensing means are provided for sensing the presence of said retaining member in a predetermined spatial relationship with said magazine, and for emitting an inhibit signal accordingly to inhibit said alarm signal and thereby enable said relative movement during the course of an exchange operation.

The machine may thus drive the movable arm during stylus changing, even though a stylus module is not mounted to the sensing module. Preferably the sensing means is provided on the magazine, and a sensor for sensing electric or magnetic fields, such as a Hall Effect sensor or magnetic reed switch.

Set out below, for the purpose of providing disclosure in this divisional application, is the matter disclosed in the claims of the parent application as filed.

One combination of features provides a coordinate positioning machine having an arm and a table movable relative to each other; a retaining module provided on the arm, having a first set of engagement elements; at least one task module stored within the working area of the machine, said task module having a second set of engagement elements which are releasably engageable with set first set of engagement elements on said retaining module; a magazine having a plurality of storage ports each for storing a said task module; means for magnetically urging said task module into engagement with said storage port in a first direction; characterised in that said retaining module, said task module and said storage port are configured so that, when said task module is retained in said storage port, the second set of engagement elements on the task module are accessible to the first set of engagement elements on the retaining module from a direction opposite to the first direction, and so that, when first and second elements are engaged, the retaining module may carry the task module away from the storage port in a second direction, transverse to the first direction.

Preferably, each storage port comprises a pair of jaws extending in said second direction.

Preferably, said task modules have an upper and a lower casing, and a neck extending therebetween, said second set of engagement elements being provided on said upper casing, and wherein the jaws of said storage ports have a spacing wider than the neck and narrower than the lower casing so that when said task module is retained in said storage port, the lower casing is magnetically urged into engagement with the jaws on one side thereof, the neck extends between the jaws, and the upper casing lies on the other side of the jaws.

Suitably, said magnetic urging means is provided on the magazine; said magnetic urging means may be a permanent magnet.

A further combination of features provides a magazine for use on a coordinate positioning machine, the magazine containing a plurality of task modules each having a set of engagement elements, to enable engagement of a task module by a retaining module provided on a movable arm of the machine, performance of an operation by the machine using said task module, and return of said task module to the magazine, the magazine comprising:
a plurality of storage ports each for retaining a said task module, each storage port having a pair of jaws extending in a first direction;
   characterised by:
means for magnetically urging a said task module into engagement with said jaws in a second direction, transverse to said first direction; and
wherein the spacing of said jaws, and the configuration of said task modules is such that said engagement elements are accessible from a direction opposite to said first direction and said task modules are disengageable from said storage ports against the action of said magnetic urging means in said direction opposite to said first direction.

Preferably said task modules have: an upper and a lower casing, a neck extending therebetween, and a set of engagement elements provided on the upper casing, and wherein the jaws of said storage ports have a spacing wider than the neck and narrower than the lower casing, so that when said task modules are retained in said storage port, the lower casing is magnetically urged into engagement with the jaws on one side thereof, the neck extends between the jaws, and the upper casing is on the other side of the jaws.

In yet a further combination of features a method of operating a coordinate positioning machine is provided, the machine having an arm and a table movable relative to each other; a retaining module provided on the arm; a plurality of task modules, each releasably engageable with the retaining module; a magazine having a plurality of storage ports each of which retains a said task module, each storage port having a pair of jaws; the method comprising the steps of sequentially:
engaging said task module with said retaining module, by magnetically urging said task module onto said retaining module;
operating the machine to perform an operation (such as measurement of workpiece dimensions) with said task module:
operating the machine to bring the task module into engagement with the jaws of a storage port;
operating the machine to move the retaining module away from the storage port in a diametrically opposite sense to the sense of the magnetic attraction force between the retaining module and task module; wherein
during said movement of the retaining module away from the storage port the jaws of the storage port apply a reaction force to said task module, equal and opposite to the said magnetic attraction force, thereby retaining the task module in the storage port and enabling disengagement of said retaining module from said task module by virtue of the movement of the movable arm and thus the retaining module.

Yet a further combination of features provides a magazine for retaining a plurality of task modules within the working area of a coordinate positioning machine, each said task module being releasably connectable to a retaining module supported on the movable arm of said machine, the magazine having:
a plurality of storage ports, each for retaining a said task module; and
at least one electromagnetic sensor for sensing the presence of at least one of an electric and a magnetic field generated by a said retaining module thereby to detect the presence of a said retaining module lying in a predetermined spatial relationship with the magazine.

Preferably, an electromagnetic sensor is provided in respect of each storage port.

Preferably, said storage ports are spaced apart in a first direction, and said magazine further comprises light beam generating means and associated detecting means, said light beam extending substantially parallel to said first direction.

In one embodiment each storage port comprises a pair of jaws defining an opening into said storage port, and wherein said light beam extends across the opening of the jaws.

This embodiment may also include an individually movable cover provided in respect of each storage port, said covers being movable between a first position in which a said task module is covered, and a second position in which said task module is exposed, wherein further beam generating means and associated detecting means are provided, the position of said further beam, and the configuration of said covers being such that said further beam is obstructed by a said cover in the second position.

Still a further combination of features provides a coordinate positioning machine comprising: a table; an arm supported by a support structure providing relative movement of the table and the arm; a probe supported on the arm, having a retaining module and a task module releasably connectable to the retaining module, the retaining module having means for detecting when a said task module becomes disconnected therefrom, and for generating an alarm signal accordingly to arrest said relative movement of said table and said alarm; a magazine having a plurality of storage ports, each for retaining a said task module to enable exchange of one said task module on said retaining module for another; wherein sensing means are provided for sensing the presence of said retaining member in a predetermined spatial relationship with said magazine, and for emitting an inhibit signal accordingly to inhibit said alarm signal and thereby enable said relative movement during the course of an exchange operation.

Preferably said sensing means are provided on the magazine.

Embodiments of the present invention will be now be described, by way of example, and with reference to the accompanying drawings in which:
Fig 1 is a section through a modular design of stylus changing probe;
Fig 2 is a perspective view of a third embodiment of magazine;
Fig 3 shows a detail of Fig 2;
Fig 4 is a side view of a storage port;
Fig 5 is a plan view of the port of Fig 4;
Fig 6 shows a detail of Figs 4 and 5;
Fig 7 is a side view of the magazine of Fig 3;
Fig 8 is a front view of a fourth embodiment of magazine;
Figs 9a-d are schematic views of a stylus changing operation with the magazine of Fig 8;
Fig 10 is a perspective view of a coordinate measuring machine incorporating a fifth embodiment of magazine; and
Fig 11 is a detail of Fig 10.
A touch probe includes a retaining module in the form of a sensing module 12 and a task module in the form of a stylus module 14 releasably mountable thereon. The stylus module 14 comprises an upper casing 16 and a lower casing 18, retained together by three bolts 20 and associated spacers 22, and enclosed by an intermediate floating skirt 24. A stylus supporting member 26 is biased into a kinematic rest position with respect to the lower casing 18 by a spring 28. The supporting member 26 is displaceable out of the rest position against the biasing action of the spring 28 thus enabling tilting of the stylus to accommodate overtravel of the probe.

The sensing module 12 comprises a fixed structure in the form of a cylindrical housing 30 and a load cell 32 supported thereon. The load cell 32 includes a first part provided by a triangular cross-section cage 34 and a second part provided by a retaining ring 36; the two parts 34,36 are interconnected by an area of weakness provided by three pillars 38 upon which semiconductor strain gauges (not shown) are mounted. The stylus module 14 is releasably mounted in a kinematic location on the sensing module 12 by engagement between a set of kinematic engagement elements on the retaining ring 36 with a set of kinematic engagement elements on the upper casing 16. The respective sets of elements are held in engagement by the attraction between magnets 40,42 provided in the upper casing 16 of the stylus module 14 and the retaining ring 36 of the sensing module 12. Thus far, such a probe is known per se and described in our co-pending European Patent Application No. 92301504.4.

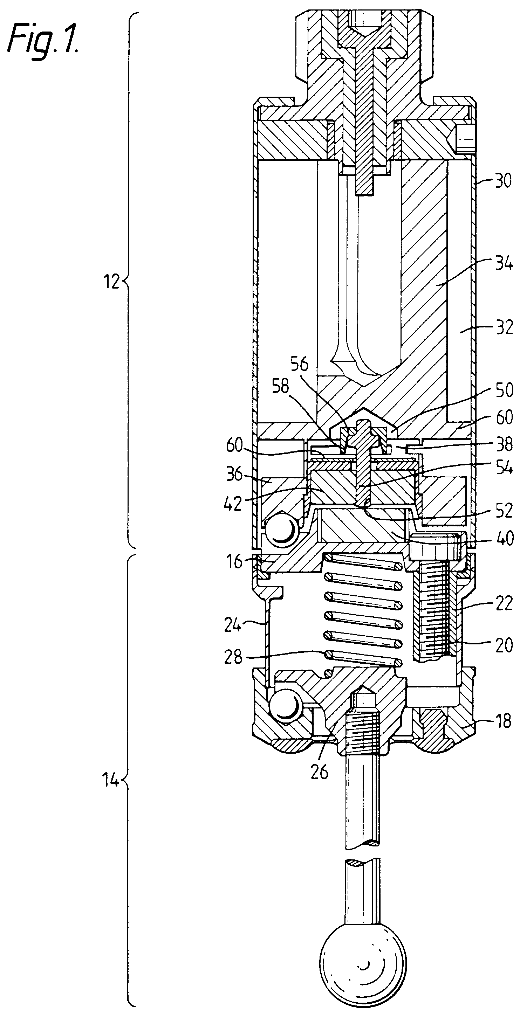

A detector is provided on the sensing module 12 to detect when the stylus module 14 is mounted thereon. Referring again to Fig 1, the detector includes a plunger 50 movable within a bore 52 provided in the magnet 42. The plunger 50 has an elongate body 54 which extends within the bore 52, with a soft iron collar 56 supported thereon at its upper end. The collar 56 has a downwardly depending skirt 58 which is urged by the attractive force between the magnet 42 and the soft iron material of the collar 56 into contact with appropriate electrical connections provided upon a printed circuit board 60, supported on the rearwardly extending face of the retaining ring 36. When the stylus module 14 is mounted on the sensing module 12, the clearance between the magnets 40,42 is such that the lower end of the plunger is urged upwardly, and the soft iron collar 56 looses contact with the circuit board 60 (the attraction force between the magnets 40,42 exceeding the attraction force between the magnet 42 and the collar 56).

Thus, when a stylus module 14 becomes disconnected from the sensing module 12, the skirt 58 completes a circuit provided upon the circuit board 60 and an alarm signal is sent to the machine control causing it to brake movement of the movable arm. Conversely, when the stylus module 14 is connected to the sensing module 12 the circuit on the circuit board 60 is broken and no alarm signal is emitted thus enabling the machine to operate normally.

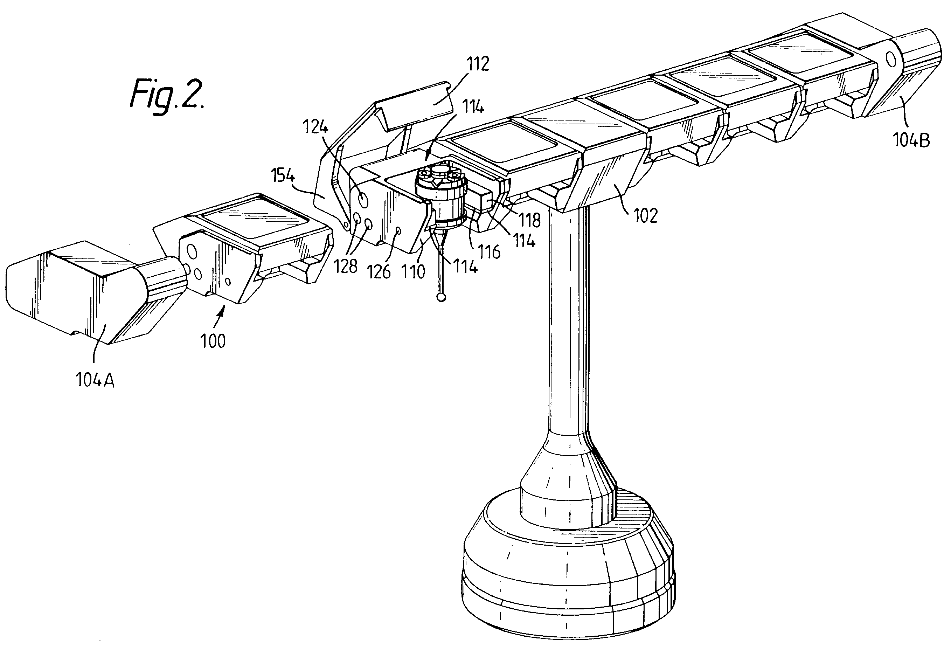

An example of a magazine suitable for use with the probe construction of Fig 1 is shown in Figs 2-7. The magazine comprises a number of modular storage ports 100 each of which is connectable to an adjacent port or, where appropriate, to an adjacent electronics module 102,104. Each of the ports 100 has a support structure comprising a base 110 and a pair of jaws in the form of docking inserts 114 supported on the base 110. Each of the inserts has an edge 116 extending proud of the base 110 in the direction of the adjacent docking insert 114. The edge surfaces 116 extend substantially parallel to each other. A lid 112 is provided in respect of each storage port 100 to protect the engagement elements on the upper casing of the stylus module 14 from contamination by e.g. dust. The lid 112 is pivotally connected to the base 110 via a hinge 113 to enable the lid 112 to lift and therefore expose the engagement elements. A permanent magnet 118 is provided on the upper surface of each docking insert 114 to retain a stylus module 14 in a storage port 100.

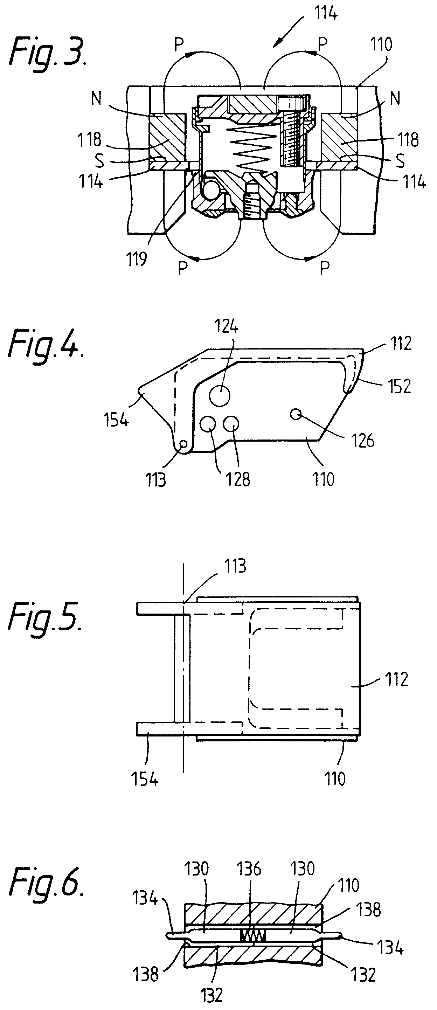

The mechanism of retention of a stylus module 14 in a storage port 100 is shown in more detail in Fig 3. The lower casing 18 of the stylus module 14 terminates at its upper end in a circular lip 19, whose diameter is greater than the diameter of the floating skirt 24. The spacing between the edge surfaces 116 is greater than the diameter of the floating skirt 24, but smaller than the diameter of the lip 19, thus allowing the stylus module 14 a degree of movement in a vertical direction which equals the distance between the upper and lower casings 16,18. The magnet 118 urges the lower casing upward, bringing the lip 19 into engagement with the docking inserts 114. The upper and lower casings 16,18 are of ferromagnetic material (e.g. steel) which, in conjunction with docking inserts 114 and magnets 118 creates a magnetic flux path as indicated by arrows P. The floating skirt is of non-ferromagnetic material to prevent magnetic forces interfering with its operation.

As mentioned earlier, the magazine is provided with a detection system to detect the presence of a sensing module 12 during a stylus changing operation, and to emit a signal which inhibits the alarm signal generated when a stylus module 14 becomes disconnected from the sensing module 12. The detection system comprises three electronic modules: a central module 102 and two end modules 104A,B. Each port 100 may be connected to an adjacent port 100 by means of a bolt 124 and a locating pin 126, and electrical connection between the centre module 102 and end modules 104A,B is provided by a pair of spring loaded contacts 128 on each port 100. Referring now to Figs 4-6, each of the contacts 128 comprises a pair of metal plungers 130 each movable within a corresponding sleeve 132 supported in the base 110 of the port 100. Each of the plungers 130 has a narrow contact end 134 terminating in a semi-spherical tip. A conducting helical spring 136 biases the plungers 130 away from each other thus urging the contact ends 134 out of the respective sleeve 132; reduced diameter portions 138 of each sleeve 132 retain the plungers in the base 110. The identical configuration of each plunger 130 in a given spring loaded contact 128 means that each port 100 can be constructed identically, and that each port 100 may be used on either side of the central electronic module 102.

End module 104A generates a pair of light beams 150. End module 104B has a photodetector situated to detect each of the light beams 150 and output a signal accordingly. When a sensing module 12 moves into the path of a beam, the obstruction of the beam causes the electronic circuitry to emit an inhibit signal. This signal inhibits the alarm signal, and thus prevents the machine control from braking movement of the movable arm because the stylus module 14 has become disconnected during the course of a stylus changing operation.

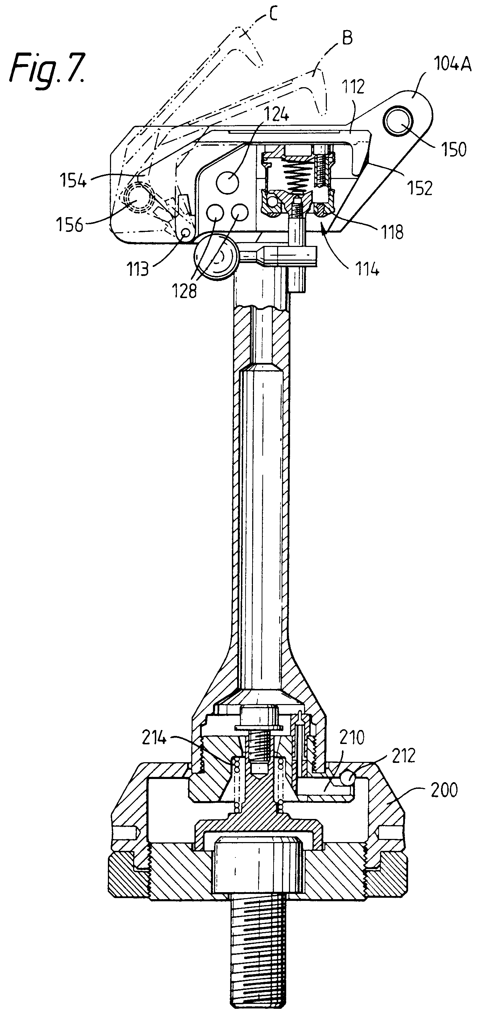

Referring now in particular to Fig 7, light beam 150 provided at the front of the magazine is obstructed by a probe as it approaches a port 100. The electronic circuitry in the modules 102,104A,B thus emits an override signal preventing any braking movement of the machine.

(N.B. The override signal is necessary at this particular point since a trigger signal may be emitted from the strain gauges as a result of the small shock caused by contact between the housing of the sensing module 12 and the front of the lid 112. When the sensing module 12 comes into contact with the lid 112, the curved profile of its forward face 152 causes it to pivot upwards as the sensing module 12 moves to the left in Fig 6. This upward pivoting of the lid 112 causes a flange 154, provided at the rear of the lid to encroach in the path of light beam 156. When the lid 112 has been tilted to position B in Fig 6, it can be seen that the flange 154 now completely obstructs the beam 156. The obstruction of beam 156 by flange 154 ensures the continued emission of an override signal as the probe moves out of the path of beam 150. Further movement of the sensing module causes continued tilting of the lid 112 to position 112 to position C in Fig 6, whereupon the sensing module 12 may move upwards thus engaging the lip 19 of the lower casing 18 of the stylus module 14 with the docking inserts 114. By Newton's third Law of Motion, the docking inserts 114 apply a downward reaction force to the lower casing 18 to hold it in place, so that continued upward movement results in breaking of the magnetic connection between the sensing module 12 and the stylus module 14. The alarm signal emitted from the probe at this point due to disconnection of the sensing module from the stylus module 12 is overridden by the inhibit signal from the modules 102,104A,B due to the continued obstruction of beam 156. The stylus module 14 then moves back to the right in Fig 6 until the lid 112 is closed over the port 100. At this position the sensing module 12 obstructs the light beam 150. The sensing module 12 may then move along the magazine until it is adjacent a further port 100, whereupon it may perform a docking operation with a further stylus module.

In a docking operation the movable arm of the machine is operated to drive the sensing module 12 initially in a horizontal direction. In the course of this movement the sensing module 14 will come into contact with the lid 112 which, because of the geometry of its front surface will be lifted up by the sensing module to expose the engagement elements on the upper casing 16 of the stylus module 14. The horizontal movement of the sensing module 14 continues until the engagement element of the sensing and stylus modules 14,16 lie in register with each other. The sensing module 14 is then moved downward. During this downward movement, the two sets of engagement elements come into engagement, and the stylus module 16 simultaneously becomes disengaged from the storage port 100. The downward movement of the sensing module 14 (which now carries a stylus module 12) is then arrested and the probe moved horizontally out of the storage port 100.

In order to prevent damage to the pillars 38 (and strain gauges provided thereon) within the sensing module 12 when the housing 30 comes into contact with the magazine, a reaction flange 60 is provided at the base of the triangular cage 34. The flange 60 has a relatively tight tolerance with respect to the inner diameter of the housing 30, thus any deformation of the housing 30 due to contact with a lid 112 will react initially against the collar 60 rather than the retaining ring 36.

The magazine is mounted upon an overtravel mechanism which enables displacement of the magazine relative to the base 200 on which it is supported, so that in the event of accidental collision between the sensing module 12 and, for example, the electronic module 102, the magazine may tilt out of its position with respect to the base 200. The overtravel mechanism for the magazine is provided by three rollers 210, each of which seat in the convergent surfaces provided by an adjacent pair of balls 212. A biasing spring 214 urges the rollers 210 into engagement with the balls 212. The rollers 210 and balls 212 are wired in a series electrical circuit to detect movement of the magazine from the rest position relative to the base 200 and to emit a signal braking movement of the movable arm of the machine in the event of such a displacement.

To enable exchange of one magazine for another, the base 200 has three radially extending apertures which allow the rollers to be disengaged from the balls 212 under the influence of a force in opposition to the biasing force provided by the spring 214, and the magazine to be rotated about its axis until the rollers 210 lie in register with the aforementioned apertures, whereupon the magazine may be removed from the base. Such a changing mechanism is more fully described in our U.S. patent no. 4,349,946.

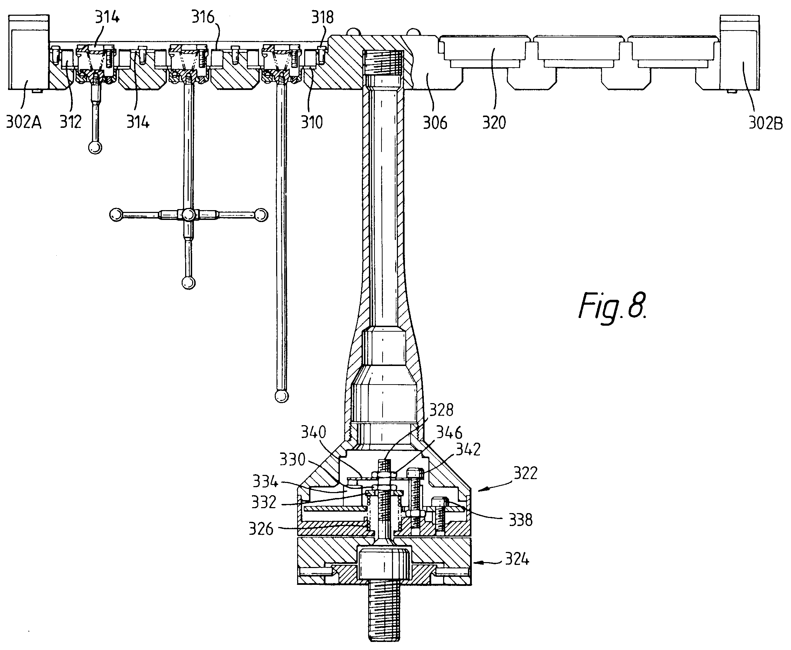

A modified form of the magazine shown in Fig 2 will now be described with reference to Fig 8. The magazine of Fig 8 additionally comprises a central electronics module 306 which includes a Hall Effect or magnetic reed switch to detect the presence of a sensing module (due to the magnet 42 in the sensing module). Other suitable sensors which detect the presence of a ferromagnetic material may also be used. The magazine of Fig 8 also differs from the magazine of Fig 2 in that the body of the magazine 308 is machined from a single piece of aluminium. Docking inserts 310 support permanent magnets 312 which are retained in position by a spacer 314 and a retaining plate 316, a fastened in place by retaining screws 318. An individually movable lid 320 is provided in respect of each storage port. The base of the magazine has a top housing 322 biased into a kinematic rest position with respect to a bottom housing 324 by the action of a compression spring 326 held in place by clamping screw 328, nut 330 and washer 332. A microswitch 334 is supported on a printed circuit board 336, which is in turn retained in the base of the upper housing 322 by three retaining bolts 338. Also retained in the base of the housing 322 is a planar contact spring 340, supported on a further bolt 342. The free end of the contact spring 340 lies adjacent the microswitch 334, and the displacement of this free end from the microswitch can be adjusted by means of an adjusting nut 346 provided on screw 328. In the event of a crash between, for example, the movable arm and the magazine, the magazine will be allowed to tilt relative to the base 324 against the action of the compression spring 326. This tilting motion will cause the planar contact spring 340 to come into contact with the microswitch 334 which will then emit a crash signal arresting movement of the movable arm.

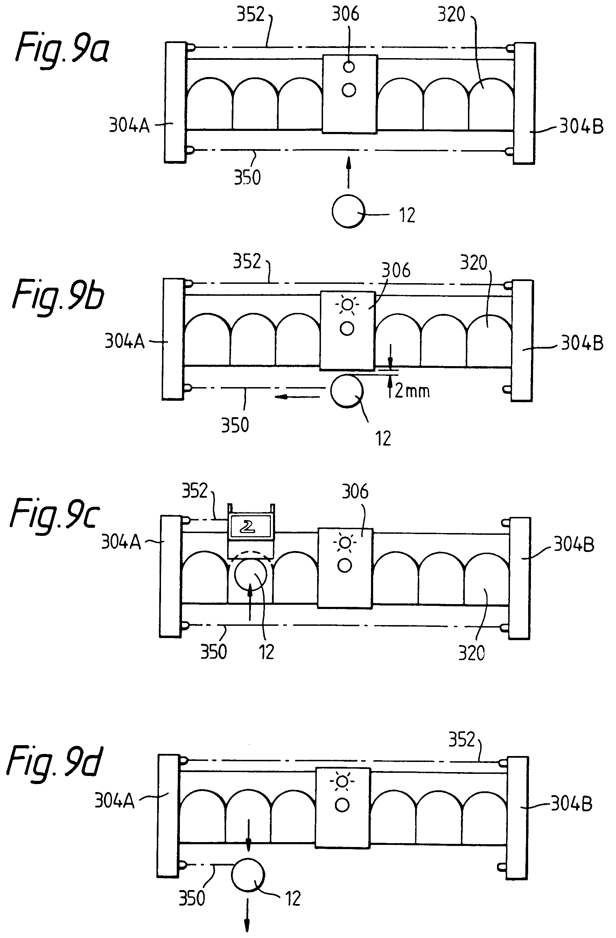

A changing operation with the modified form of magazine will now be described with reference to Figs 9a-d. In order to cause the magazine to emit an inhibiting signal preventing the sensing module from emitting an alarm signal when a stylus module becomes detached therefrom, the Hall Effect sensor provided in the central electronics module 306 must be actuated, and one of the light beams 350,352 simultaneously obstructed. Initially, therefore during a stylus changing operation, the sensing module must always approach the central electronics module in order to actuate the Hall Effect sensor. Inevitably the sensing module 14 will simultaneously obstruct the light beam 350, thus causing the magazine to emit an inhibit signal. The sensing module 14 is then moved along the magazine into a position adjacent the requisite storage port (Fig 9b), and during this operation the light beam 350 remains obstructed, causing the continued emission of an inhibit signal. As the sensing module 14 is moved into position to engage a stylus module, the flanges at the rear of the lid 320 obstruct the light beam 352, even though the sensing module 14 now moves out of the path of the light beam 350; the inhibit signal is therefore continually emitted. Once a stylus changing operation is complete the sensing module 14 is then moved directly away from the particular storage port in question. Both the beams 350,352 are then remade and the inhibit signal from the magazine ceases. The probe is then re-enabled, allowing the alarm signal from the sensing module 14 (in the event that the stylus module 12 becomes disconnected therefrom) to be emitted.

This modified form of magazine, with two independent sensing devices to detect the presence of a sensing module during a stylus changing operation, prevents the emission of an inhibit signal when only one of the light beams is obstructed. This removes the possibility that the inhibit signal will be emitted while the beams are obstructed by a machine operators hand for example.

In a further modification, the inhibit signal is emitted once the Hall Effect sensor has been actuated, and provided one of the light beams is not unobstructed for a time period exceeding e.g. 5 seconds. This allows a stylus changing operation where the stylus has a star configuration and the probe therefore cannot be moved along the magazine in the path of the light beam 350 without colliding with other stylus modules, or the magazine itself. In yet a further modification a Hall Effect sensor is provided in respect of each storage port, thereby obviating the need for the rear beam, or the requirement that the sensing module 16 visit the central module 306 before each stylus changing operation.

A further aspect of the present invention relates to the mounting of a magazine on a coordinate positioning machine such as a coordinate measuring machine.

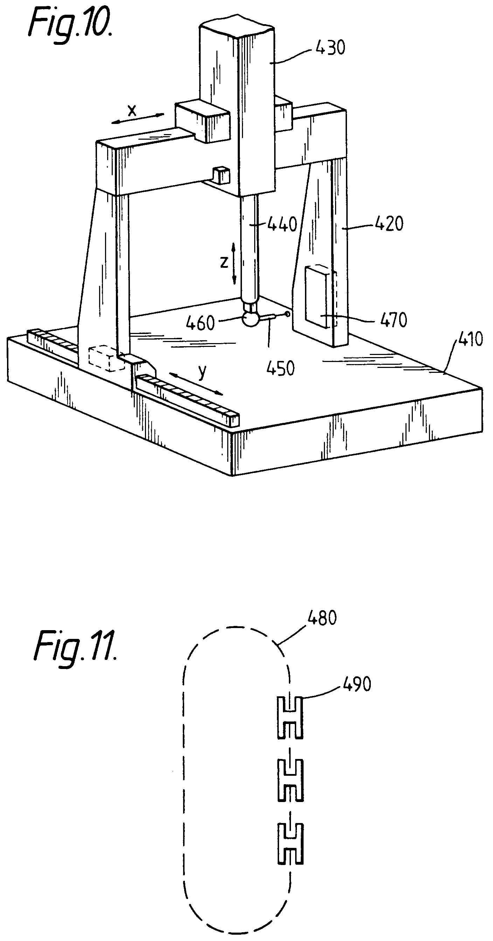

Referring now to Fig 10, a coordinate measuring machine 400 comprises a table 410 along which a bridge 420 moves in a direction defined as the Y direction. A carriage 430 is supported on the bridge for movement relative to the bridge in the direction defined as the X direction, which is orthogonal to the Y direction, and a movable arm 440 is movable within the carriage relative to both, the carriage 430 in a direction defined as the Z direction. Thus, a support structure for the movable arm 440 comprising the bridge 420 and the carriage 430 provides movement of the movable arm 440 in three dimensions relative to the table 410. In an alternative, and entirely equivalent construction of the coordinate measuring machine, the bridge 420 is stationary and the table 410 moves in the X and Y directions relative to the bridge. An inspection probe 450 is supported at the end of the movable arm 440 via a probe head 460, which provides orientation of the probe 150 relative to the movable arm 440 about two orthogonal rotational axes.

Traditionally, a magazine is supported on the table 410 of a coordinate measuring machine. However, in this embodiment of the present invention, the magazine is supported inside a cavity 470 provided in the bridge 420 of the machine. The magazine supported inside the cavity 470 may be of the type illustrated in e.g. Fig 2. Alternatively, if free access by the probe 450 to all of the ports of the magazine is not possible, a storage port may be supported on a conveyor belt 480. The conveyor belt 420 is driven by motors (not shown) which circulate the ports 490 until the appropriate port is accessible by the probe 450.

Retaining the magazine in the bridge 420 of the machine has several advantages. Firstly, the total available volume of the machine which may be used to inspect parts is increased substantially by removing the magazine from the table 410. Secondly, an exchange operation may be performed while the bridge 420 is moving from one end of the table 410 to another, thus speeding up substantially the cycle time required to perform a measurement operation.

## Claims

1. A touch probe for use on an arm of a coordinate positioning ,machine, comprising:
a retaining module (12), which in use is supported on the arm;
a stylus module (14), releasably connectable to the retaining module (12), having a casing (16,18) and a stylus supporting member (26) inside the casing (16,18), mutually engageable elements provided on the casing (16,18) and the supporting member (26), and a bias (28) for biasing said elements into engagement, said supporting member (26) being displaceable such that said elements disengage upon the application of a force to said supporting member (26), said bias (28) acting to restore said engagement when said force is removed; wherein:
said retaining module having means (54,56,58,60) for detecting when said stylus module is disconnected therefrom.

2. A touch probe according to claim 1 wherein releasable connection of said stylus member to said retaining module is a magnetic connection.

3. A coordinate positioning machine having a table (410) and an arm (440) movable relative to each other, and a touch probe (450) according to claim 1 or claim 2 mounted on said arm (440), wherein said probe generates an alarm signal upon disconnection of said stylus and retaining modules (12,14), said alarm signal preventing relative movement of said table (410) and arm (440).

4. A machine according to claim 3 further comprising a magazine having a plurality of storage ports (300), each for retaining a said task module (14) to enable exchange of one said task module (14) on said retaining module (12) for another; wherein sensing means (302;306) are provided for sensing the presence of said retaining module (14) in a predetermined spatial relationship with said magazine, and for emitting an inhibit signal accordingly to inhibit said alarm signal and thereby enable said relative movement during the course of an exchange operation.

5. A coordinate positioning machine comprising: a table and an arm movable one relative to the other; a probe supported on the arm having a retaining module (12) and a task module (14) releasably connectable to the retaining module (12), the retaining module (12) having means (50) for detecting when a said task module (14) becomes disconnected therefrom, and for generating an alarm signal accordingly to arrest said relative movement of said table and said arm; a magazine having a plurality of storage ports (300), each for retaining a said task module (14) to enable exchange of one said task module (14) on said retaining module (12) for another; wherein sensing means (302;306) are provided for sensing the presence of said retaining module (14) in a predetermined spatial relationship with said magazine, and for emitting an inhibit signal accordingly to inhibit said alarm signal and thereby enable said relative movement during the course of an exchange operation.

6. A machine according to claim 5 wherein said sensing means are provided on the magazine.
